# EUROPEAN PATENT SPECIFICATION

(11) **EP 0 719 305 B1**
(45) Date of publication and mention of the grant of the patent: **04.02.1998**
(21) Application number: 94926940.1
(22) Date of filing: 14.09.1994
(51) Int. Cl.: C09D 5/02, B01F 17/00

(54) **AQUEOUS COATING COMPOSITIONS INCLUDING AN AMPHIPHATIC EMULSIFIER**
WÄSSERIGE BESCHICHTUNGSZUSAMMENSETZUNGEN DIE EIN AMPHIPHATISCHES EMULGIERMITTEL ENTHALTEN
COMPOSITIONS DE REVETEMENT AQUEUSES RENFERMANT UN EMULSIFIANT AMPHIPHATIQUE

(30) Priority: 17.09.1993 EP 93202692
(43) Date of publication of application: 03.07.1996
(73) Proprietor: Akzo Nobel N.V., 6824 BM Arnhem (NL)
(72) Inventor: FEITH, Bernhard, Hugo, D-71706 Markgröningen (DE); FLOCKE, Delia, Hannelore, Heiderose, D-71686 Remseck 2 (DE); ROOIJEN van, Huibregd, NL-4624 HD Bergen op Zoom (NL); VAN WINGERDE, Mario, Martinus, Maria, Louisville, Kentucky 40241 (US)
(74) Representative: Schalkwijk, Pieter Cornelis
(86) International application number: EP9403071
(87) International publication number: WO9507951

(56) References cited:
- EP-A- 0 203 296
- WO-A-92/07010
- US-A- 3 945 964

## Description

### Introduction

The present invention relates generally to aqueous coating compositions comprising a functional groups-containing crosslinkable resin and, optionally, a curing/crosslinking agent for functional groups of the crosslinkable resin, which are dispersed in an aqueous medium with the aid of a special oligomeric/polymeric amphiphatic emulsifying agent.

Most successful coating compositions, particularly those suited for use in the automotive industry, have been based upon generally lipophilic crosslinkable binder resins diluted in organic solvents. Increasingly stringent health/safety and environmental legislation, however, is making the use of organic solvents an expensive and unfashionable option for the coatings industry. As such, the industry is intensively seeking waterborne alternatives to their long-standing and commercially successful organic solvent based products; however, it has been difficult at best to make the switch to water without significant loss of coating stability and/or resulting film quality.

One pursued option has been to render the lipophilic resins water-dilutable (so called "self-emulsifying" resins). This can and has been done, for example, by building hydrophilic functionality into a polymer backbone or by providing the polymer with a structure wherein the hydrophilic functionality is made pendant to such polymeric backbone. See, for example, US2634245, US3379548, US4116902, US4133786, US4028313, US4255541, US4277380, US4303565, US4315044, US4321305, US4333865, US4585828, US4608406, US5021544, US5100966, GB1117126, GB1199810, GB1517767, W083/00151, EP-A-0445863 and EP-A-0469646. The results obtained with this option, however, are not always satisfactory because the resins often possess a relatively large number of hydrophilic groups, tending to render the resulting films somewhat water-sensitive.

Another option has been to disperse these lipophilic resins in water with the aid of separate dispersing agents. For example, US4352898, US4598108, US4737530, US4929661 and EP-A-0262720 disclose the use of relatively low molecular weight organic compounds as dispersing agents. The described aqueous coatings, while satisfactory in many respects, may still require the use of significant amounts of organic co-solvents. Additionally, the described dispersants may evaporate and contribute to the overall VOC, and what dispersant remains in the resulting film tends to act as an undesirable hydrophilic center.

Relatively higher molecular weight surfactants have also been used. For example, US3945964, US4318832 and W084/00169 describe the use of various non-ionic (e.g., polyoxyalkylene) and anionic surfactants. The described surfactants, however, are generally non-reactive and, while solving certain disadvantages of the lower molecular weight organic compounds, have a stronger tendency than the lower molecular weight counterparts to remain as undesirable hydrophilic centers in the resulting films.

In a still further attempt to overcome the problems associated with the above-referenced systems, it has been proposed to use surfactants which become bound into the film structure during the crosslinking reaction. Such "reactive emulsifiers" have been described, for example, in AU-A-82247/87, GB1517767, GB-A-2100271, GB-A-2112793, DE-OS-2455896, CA-A-2007097, US3979346, US4028313, US4221685, US4233194, US4321170, US4331573, US4446258, US4538000, US5100966 and W092/07010.

### Summary of the Invention

An especially advantageous class of amphiphatic emulsifiers has now been found which can be utilized to formulate aqueous coating compositions of generally lipophilic, crosslinkable binders without the need for significant amounts of either organic cosolvents or volatile amines, the latter being generally used to render acid group-containing (anionic) components water-dilutable.

These goals are accomplished, in part, through the use of a special amphiphatic emulsifier which comprises the reaction product of a lipophilic internally unsaturated polyester backbone and a hydrophilic polyoxyalkylene monoamine monoalkylether of the formula (I) 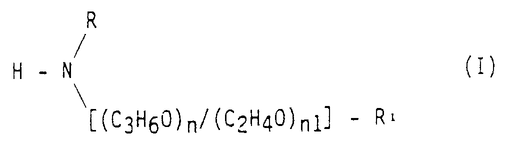 wherein
R is the residue of a monoepoxide compound after reaction with an amine group,
R¹ is selected from a C₁ to C₄ alkyl group,
n is 0 to 25,
n1 is 1 to 50,
with the proviso that n+n1 ≤ 50,
the amphiphatic emulsifier comprising on average 30-80 wt% ethylene oxide units, an acid value of less than 5, an Mn of 1000-50000, an OH value of 10 - 300, and a C=C equivalent weight of 100 - 50000.

In accordance with the present invention, there is provided an aqueous coating composition comprising (A) a generally lipophilic, crosslinkable binder, (B) optionally, a chemical curing/crosslinking agent for the crosslinkable binder and (C) an emulsifying agent, characterized in that the emulsifying agent comprises the above-described amphiphatic emulsifer.

A surprising advantage of the use of these amphiphatic emulsifiers in accordance with the present invention is that aqueous coating systems can be formulated based upon a wide variety of generally lipophilic binder polymers, which aqueous coating compositions retain the desirable benefits of their organic solvent based counterparts including good solvent (both organic and aqueous) resistance as well as good corrosion resistance. The need for significant amounts of organic co-solvents, therefore, is alleviated. Further advantages noted with the emulsifiers of the current invention include easier mixing of the components of the aqueous coating composition and improved compatibility among the components of the composition.

In particular, the use of these amphiphatic emulsifiers as reactive amphiphatic emulsifiers alleviates many of the problems associated with the self-emulsifying resins because this option allows a more optimum distribution and number of hydrophilic groups. In addition, many of the problems of the higher molecular weight non-reactive and lower molecular weight emulsifying agents are alleviated because the reactive emulsifier is bound into the final crosslinked polymer network.

These and other features and advantages of the present invention will be more readily understood by those skilled in the art from a reading of the following detailed description.

### Detailed Description of the Preferred Embodiments

As mentioned above, the aqueous coating compositions in accordance with the present invention are based in part upon generally lipophilic crosslinkable binders.

According to the present invention, the generally lipophilic crosslinkable binders may be based upon any number of the well-known variety of polymer systems commonly utilized in coatings applications. As some examples thereof may be mentioned polyesters and alkyds, polyepoxyesters, polyethers, polyurethanes, cellulose-based polymers, polycarbonates, polyacrylates and polyvinyls, polyamides, polyacetals, etc. Also included in the class of generally lipophilic crosslinkable binders are those lipophilic resins which have been rendered water-dilutable ("self-emulsifying") by, e.g., building hydrophilic functionality either into a polymer backbone and/or pendant to such backbone. Examples of such polymers are provided in, for example US2634245, US3379548, US4116902, US4133786, US4028313, US4255541, US4277380, US4303565, US4315044, US4321305, US4333865, US4585828, US4608406, US5021544, US5100966, GB1117126, GB1199810, GB1517767, W083/00151, EP-A-0445863 and EP-A-0469646.

Preferably, the binders are based upon polymers containing essentially ester and/or addition polymer linkages such as, for example, polyesters (including alkyds), polyepoxyesters and polymers produced via free-radical addition polymerization. These preferred polymers may also contain minor amounts of other types of linkages such as, for example, urethane (e.g., from chain extension of a polyol with a diisocyanate), ether (e.g., chain extension of a polyol with a diepoxide) and others well-known to those skilled in the relevant art. "Crosslinking" is a concept well-known to those skilled in the art. Crosslinking, of course, refers to chemical drying as opposed to mere solvent evaporation, although both can play significant roles in ultimate film formation. Crosslinking functionality in coatings is varied and again generally known to those skilled in the art.

As specific suitable examples of crosslinking functionalities may be mentioned the following:
- (i): activated unsaturated groups such as (meth)acryloyl groups, maleimides (see, e.g., EP-A-0357110) and other groups derived from maleic acid and anhydride, fumaric acid, and itaconic acid and anhydride;
- (ii): other forms of ethylenic unsaturation, especially that capable of autoxidation such as allyloxy groups and groups derived from drying and semi-drying oils and acid derivatives thereof (see, e.g., US2634245, US3379548, US3979346, US4131579, US4321170, US4505986, EP-A-0234641 and W084/00169);
- (iii): conjugated ethylenic unsaturation other than that derived from drying oils, for example, that derived from furfuryl compounds or sorbic acid (see, e.g., EP-A-0357110 and US4070259);
- (iv): activated methylene groups such as acetoacetate and malonate groups;
- (v): epoxy groups;
- (vi): hydroxyl groups;
- (vii): aromatic activated aldehyde groups (see, e.g., US5071481);
- (viii): cyclic carbonate groups (see, e.g., JP-A-01146966, JP-A-01146968 and JP-A-02053880);
- (ix): azlactone groups (see, e.g., Katritzky et al, "Further Polymers Derived from Bisazlactones and Tetraamino Compounds," Journal of Polymer Science: Part A: Polymer Chemistry, Vol. 27, 1515-24 (1989), and K.J. Abbey, "Novel Storage Stable, Low Temperature Curable Coating Compositions," ACS Pol. Mat. Sci. Eng., Vol. 63, 936-40 (1990);
- (x): oxalate ester groups (see, e.g., US4414250 and DE-A-4036984);
- (xi): oxazoline and oxazolidine groups (see, e.g., US4373008); and
- (xii): hydroxyl and alkylol amide groups.

All of the abvove-mentioned disclosures are incorporated by reference herein for all purposes as if fully set forth.

Especially preferred of the above are those that are capable of reacting under the same conditions as the reactive functionality of the polyester backbone of the emulsifier (e.g., hydroxyl and/or unsaturation). Specifically preferred include hydroxyl groups, as well as activated unsaturated groups, other autoxidizable ethylenically unsaturated groups, activated methylene groups and epoxy groups, which are discussed in detail below.

As examples of suitable generally lipophilic polymers containing one or more, and preferably on average at least two, activated unsaturated groups may be mentioned those disclosed in US4303563 (column 5, line 42 through column 7, line 30), US4373008 (column 2, line 54 through column 4, line 47), US4382102 (column 2, line 12 through column 3, line 4), US4408018 (column 2, lines 19-68), US4590101 (column 3, line 29 through column 4, line 12), US4602061 (column 3, lines 14-55), US4871822 (column 3, line 10 through column 4, line 14), US4981944 (column 2, line 23 through column 5, line 36), US4990577 (column 1, line 44 thorugh column 3, line 39), US5021544 (column 2, line 19 through column 6, line 33), US5100966 (column 3, line 9 through column 5, line 34), EP-A-0262720 (column 1, line 44 through column 4, line 31) and US5112904 (column 2, line 22 through column 6, line 4). All of the above are incorporated by reference herein for all purposes as if fully set forth.

As the preferred pendant activated unsaturated groups for the polymer may be mentioned groups of the following general formulas (II), (III), (IV) and/or (V) 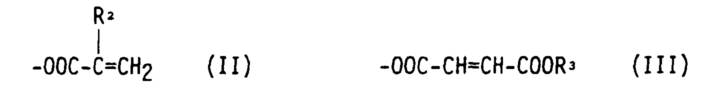 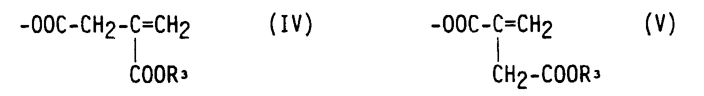 wherein
R² is selected from an H atom and a methyl group,
R³ is selected from an H atom, a group R⁴, a group of the following general formula (VI) and a group of the following general formula (VII):

   -CH(OH)-CH₂-CH₂R⁵ (VI)

   and

   -CH₂-CH(OH)-CH₂R⁵ (VII),
R⁴ is selected from an alkyl group, a cycloalkyl group and an aryl group, which groups may be substituted or not with an alkyl, and
R⁵ is selected from an H atom, a group R⁴, a group of the following general formula (VIII) and a group of the following general formula (IX):

   -OR⁴ (VIII)

   and

   -OOC-R⁴ (IX).

As examples of suitable polymers containing pendant activated unsaturated groups of the formula (II) may be mentioned those disclosed in previously incorporated US4382102, US46020061, US4990577, US5100966, US5112904 and EP-A-0262720. In general, these polymers may be referred to as acryloyl and methacryloyl group-containing polymers.

Preferred examples include (i) the acrylic and/or methacrylic esters of di-, tri- and polyvalent polyols such as polyester, polyacrylic and polyepoxyester polyols; (ii) adducts of an hydroxyl group-containing acrylic and/or methacrylic ester or amide to a compound containing at least two isocyanate and/or epoxy groups; and (iii) adducts of acrylic and/or methacrylic acid to a compound containing at least two epoxy groups. Especially preferred among these are the adducts of acrylic and/or methacrylic acid to the epoxy groups-containing compounds. Further details may be found from the previously mentioned references.

As specific examples of suitable polymers containing pendent activated unsaturated groups of the formulas (III), (IV) and (V) may be mentioned those disclosed in previously incorporated US4981944 and US5112904. In general, these pendant activated unsaturated groups are derived from maleic acid and anhydride, fumaric acid, and itaconic acid and anhydride.

Preferred examples include (i) adducts of maleic acid (anhydride) and/or itaconic acid (anhydride) to an OH groups-containing polymer, with subsequent reaction (e.g., esterification or neutralization) of at least a portion of remaining carboxyl functionality; (ii) adducts of maleic, fumaric and/or itaconic monoesters to compounds containing at least two epoxy groups; and (iii) adducts of monofunctional epoxy compounds to maleic, fumaric and/or itaconic monomesters, which are subsequently reacted with compounds containing at least two isocyanate groups. Especially preferred among these are the adducts of the maleic and/or itaconic acid (anhydride) to the OH groups-containing polymers. Further details again may be found from the previously mentioned references.

In general aspects, it is preferred that the activated unsaturated group-containing polymers possess a number average molecular weight (Mn) in the range of from about 800 to about 100000, more preferably in the range of from about 800 to about 15000, and a C=C equivalent weight in the range of from about 400 to about 3000, more preferably from about 500 to about 1500.

As examples of suitable generally lipophilic autoxidizable polymers may be mentioned drying oil modified polyesters (often referred to as alkyds), polyepoxyesters and addition polymers. These polymers are in general well-known in the art, as exemplified by US2634245 (column 2, line 54 through column 3, line 45), US3379548 (column 1, line 49 through column 2, line 53), US3979346 (column 5, lines 40-47 and Table I), US4131579 (column 1, line 65 through column 4, line 56), US4321170 (column 2, line 28 through column 5, line 30) and US4505986 (column 1, line 52 through column 5, line 10).

In addition, certain allyl group-containing polymers are also considered suitable, such as those disclosed in EP-A-0234641 (page 2, line 17 through page 3, line 50) and W084/00169 (page 4, line 11 through page 5, line 6).

Preferred of these are the alkyds which, as is well-known to those skilled in the art, are generally defined as the reaction products (polyesters) of di- and polyhydric alcohols with di- and polybasic carboxylic acids (and anhydrides), modified by the reaction with unsaturated fatty acids and glycerides thereof (fatty oils).

As suitable di- and polyhydric alcohols may be mentioned ethylene glycol, 1,2- and 1,3-propylene glycol, 1,4- and 2,3-butylene glycol, 1,6-hexane diol, 1,8-octane diol, neopentyl glycol, 1,1-dimethylol cyclohexane, 2-methyl-1,3-propane diol, glycerol, trimethylolpropane, 1,2,6-hexane triol, 1,2,4-butane triol, trimethylolethane, pentaerythritol, quintol, mannitol and sorbitol, methyl glycoside, and di- and higher alkylene glycols.

As suitable di- and polybasic carboxylic acids may be mentioned succinic acid, adipic acid, suberic acid, azelaic acid, sebacic acid, phthalic acid, isophthalic acid, trimellitic acid, tetrahydrophthalic acid, hexahydrophthalic acid, glutaric acid, maleic acid, fumaric acid, itaconic acid, crotonic acid, citric acid, terephthalic acid, naphthalene-2,6-dicarboxylic acid, dodecane dicarboxylic acid, and dimer and trimer fatty acids, as well as the anhydride derivatives of the above where they exist.

As suitable unsaturated fatty acids may be mentioned myristoleic acid, palmitoleic acid, oleic acid, gadoleic acid, erucic acid, ricinoleic acid, linoleic acid, linolenic acid, eleostearic acid, licanic acid, arachidonic acid, clupanodonic acid, other unsaturated fatty acids prepared from animal and vegetable oils, as well as mixtures and fatty oil derivatives thereof. Often utilized in the production of alkyds are natural oils such as, for example, linseed oil, soya oil, castor oil, tall oil and tall oil fatty acid, coconut oil, palm kernal oil, fish oils and safflower oil.

For air-drying applications (autoxidation), it is preferred to utilize medium oil (40-60% oil length) and long oil (>60% oil length) alkyds.

As examples of generally lipophilic polymers containing one or more, and preferably on average at least two, pendant activated methylene groups may be mentioned those disclosed in US4408018 (column 1, line 51 through column 2, line 6), US4602061 (column 1, line 50 through column 3, line 13), US4772680 (column 1, line 23 through column 2, line 54), US4871822 (column 4, line 34 through column 5, line 9) and US4929661 (column 1, line 32 through column 2, line 69). All of the above not already so are incorporated by reference herein for all purposes as if fully set forth.

As specific examples may be mentioned compounds obtained by reacting diketene or an alkyl acetoacetate with a polyol having two or more hydroxyl groups, for example, polyester polyols such as polycaprolactone polyols, epoxy resins obtained by reacting epichlorohydrin with a diaryloyl alkane, and acrylic polyols obtained by the addition (co)polymerization of hydroxyl group-containing (meth)acrylic monomers optionally with other addition polymerizable monomers. Such acetoacetate group-containing oligomers/polymers can also be obtained by (co)polymerizing monomer units having one or more acetoacetate groups, for example, the acetoacetate esters of hydroxyalkyl (meth)acrylate or allyl alcohol monomer units. Further details may be found from the previously mentioned references.

Preferred among the acetoacetate group-containing polymers may be mentioned the polyesters and acrylic polymers produced by (co)polymerizing monomers containing acetoacetate groups, and particularly acrylic (co)polymers obtained by (co)polymerizing acetoacetate esters of hydroxyalkyl (meth)acrylates optionally with other addition polymerizable monomers.

In general apsects, it is preferred that the acetoacetate group-containing polymers possess a number average molecular weight (Mn) in the range of from about 700 to about 100000, more preferably in the range of from about 1000 to about 10000, and an acetoacetate equivalent weight of about 200 to about 3000, more preferably from about 400 to 1500.

As examples of generally lipophilic polymers containing epoxy groups, and preferably on average at least two epoxy groups, may be mentioned those disclosed in US3945964 (column 1, lines 13-54), US4318832 (column 2, line 39 through column 3, line 24), US4352898 (column 6, line 42 through column 7, line 17), US4598108 (column 1, line 39 through column 2, line 30), US4737530 (column 1, line 46 through column 2, line 37) and US4990577 (column 2, line 57 through column 3, line 23). All of the above not already so are incorporated by reference herein for all purposes as if fully set forth.

As specific examples of such, which may be solid or liquid, may be mentioned polyepoxyesters based upon mono-, di- or polyglycidyl ethers of (cyclo)aliphatic or aromatic hydroxyl compounds such as allyl alcohol, butanol, cyclohexanol, phenol, butyl phenol, decanol, ethylene glycol, glycerol, cyclohexane diol, mononuclear di- or trifunctional phenols, bisphenols such as Bisphenol-A or Bisphenol-F, and multinuclear phenols; polymers of ethylenically compounds with epoxy groups such as glycidyl (meth)acrylate, N-glycidyl (meth)acrylamide and/or allyl glycidyl ether, and optionally one or more other copolymerizable, ethylenically unsaturated monomers; glycidyl esters of fatty acids containing, for instance, 6-24 carbon atoms; an epoxidized polyalkadiene such as epoxidized polybutadiene; hydantoin epoxy resins; and other glycidyl groups-containing resins such as polyesters which contain one or more glycidyl groups per molecule.

Preferred of these include polyepoxyesters of cycloaliphatic epoxy compounds and addition polymers of ethylenically unsaturated compounds containing epoxy groups, such as glycidyl (meth)acrylate and/or allyl glycidyl ether, and optionally one or more other addition polymerizable monomers. Especially preferred are the addition polymers.

In general apsects, it is preferred that the epoxy group-containing polymers possess a number average molecular weight (Mn) in the range of from about 700 to about 100000, more preferably in the range of from about 1000 to about 20000, and an epoxy equivalent weight of about 200 to about 3000, more preferably from about 400 to 1500.

As examples of suitable hydroxyl groups-containing polymers may be mentioned the hydroxyl groups-containing polyesters and alkyds, polyepoxyesters and addition polymers mentioned above.

Particularly suitable hydroxyl groups-containing alkyds for use in the present invention are short oil alkyds (oil length <40%), which are commonly used in stoving applications in combination with hydroxyl reactive crosslinking agents such as melamines and isocyanates.

Production of these hydroxyl groups-containing polyesters, alkyds and polyepoxyesters may be accomplished by procedures well-known in the art as exemplified by many of the previously incorporated references.

Of course, the generally lipophilic polymer backbones may comprise various combinations of these and other different functionalities. This is evident from the above discussion as well as the previously incorporated references (e.g., the short oil alkyds).

Further in accordance with the present invention, the aqueous coating compositions may optionally comprise chemical curing/crosslinking agents for the crosslinkable groups of the generally lipophilic crosslinkable binders.

As utilized herein, "curing agent" refers to an agent which merely initiates and sustains a crosslinking reaction. Curing agents, such as peroxides and photoinitiators (activated by UV radiation), are normally utilized in small amounts with respect to the resin and are not substantially bound into the final crosslinked polymer structure.

"Crosslinking agents," on the other hand, are substances containing functional groups which react with the crosslinking functionality of the binder and are, as a consequence, incorporated into the final crosslinked polymer structure. Crosslinking agents are generally utilized in relatively large amounts with respect to the resin. In addition, "catalysts" are agents which merely accelerate the crosslinking reaction. For example, the autoxidation of ethylenic unsaturation via the taking up of oxygen from the air can be accelerated by the addition of a catalyst such as a metal complex.

Crosslinking can also be initiated and sustained, for example, by various forms of energy such as heat, microwave radiation, etc.

In general, the types and choice of curing/crosslinking agents for the above-mentioned crosslinking functionalities depend upon a number of factors which are well-known to those skilled in the art, as exemplified by the many incorporated references. Specific examples of possible, though non-limiting, crosslinking agents are anhydrides or epoxy compounds.

As preferred crosslinking agents for hydroxyl groups may be mentioned isocyanates and aminoplasts.

As suitable isocyanates may be mentioned aliphatic, cycloaliphatic and aromatic di-, tri- oder tetraisocyanates, their adducts with hydroxylgroup containing compounds, isocyanurate-group containing compounds and mixtures thereof, all of which are well-known to those skilled in the art. Preferred isocyanate compounds are those typified by Basonat PLR 8878 of BASF and Desmodur VP LS 2550 & Bayhydur VP LS 2980 (formerly Desmodur VP LS 2980) of Bayer.

These isocyanates may also be blocked with well-known blocking agents such as ketoximes.

As suitable aminoplasts may be mentioned N-methylol and/or N-methylol ether containing aminoplasts such as a methylol melamine containing 4-6 methylol groups per molecule, with at least three of the methylol groups being etherified with methanol, butanol and/or a methanol or butanol condensation product of formaldehyde and N,N'-ethylene diurea.

As preferred crosslinking agents for activated unsaturated groups may be mentioned those that react with activated unsaturated groups via a Michael addition. As preferred such Michael addition crosslinking agents may be mentioned a wide variety of primary and/or secondary amine groups-containing compounds such as, for example, those disclosed in US3291775, US4303563, US4981944, US4990577 and US5011994. All of these disclosures are incorporated by reference herein as if fully set forth.

As preferred examples of such amine crosslinking agents may be mentioned (i) aliphatic and/or cycloaliphatic amine compounds containing 2-24 carbon atoms and at least one primary amino group; and (ii) adducts of a molecular weight of 300-1500 of (a) an epoxy, isocyanate and/or α,β-ethylenically unsaturated carbonyl compound and (b) a compound containing at least one primary amino group and a group reacting with the epoxy, isocyanate and/or α,β-ethylenically unsaturated carbonyl compound. More preferably, these amine crosslinking agents contain 2-4 primary amino groups and 0-4 secondary amino groups. Especially preferred of these are, for example, polyether polyamines of the type commercially available under the trade designation "Jeffamine" of Texaco Chemical Company.

Other suitable amine crosslinking agents include monoprimary amine compounds of the general formula (X):

H₂N-(CH₂)ₙ₂-NR⁶R⁷ (X)

wherein
n2 is a number from 1 to 4,
R⁶ is selected from an H atom, a C₁ to C₃ alkyl and a monohydroxy substituted C₁ to C₃ alkyl, and
R⁷ is selected from a C₁ to C₃ alkyl and a monohydroxy substituted C₁ to C₃ alkyl,
which are disclosed in US5112904, the disclosure of which is also incorporated by reference herein as if fully set forth. Especially preferred of these are, for example, N-ethyl-N-(2-aminoethyl) ethylamine, N-methyl-N-(3-aminopropyl) ethanolamine, N-methyl-N-(2-aminoethyl) methylamine and N-methyl-N-(3-aminopropyl) methylamine.

Of the amine crosslinking agents, the most preferred for use in the present aqueous coating compositions are the polyether polyamines.

Oxazolidine compounds, such as disclosed in US4373008 (the disclosure of which is incorporated by reference herein as if fully set forth), are also suitable Michael addition-type crosslinking agents.

As still other suitable Michael addition type crosslinking agents may be mentioned compounds containing activated methylene groups, for example, acetoacetate and/or malonate group-containing compounds.

As suitable acetoacetate group-containing compounds may be mentioned lower molecular weight acetoacetates such as trimethylolpropane triacetoacetate, as well as polymeric compounds containing pendant acetoacetate groups such as disclosed in US4408018 (the disclosure of which is incorporated by reference herein as if fully set forth).

As suitable malonate group-containing compounds may be mentioned polymalonate oligomeric and polymeric esters such as disclosed in US4602061 (the disclosure of which is incorporated by reference herein as if fully set forth).

As suitable combination curing/crosslinking agents for activated unsaturated groups may be mentioned, for example, allyloxy groups-containing compounds such as disclosed in US4590101, AU66/2337, EP-A-0067625 and US4145248, the disclosures of which are all incorporated by reference herein as if fully set forth.

Preferred among these free radical reactive curing/crosslinking agents are those comprising an oligomeric and/or polymeric backbone including a plurality of polymer units containing pendant allyloxy groups, such as those of the general formula (XI): 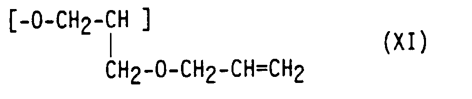 An especially preferred reactive crosslinker of the general formula (XI) is commercially available under the trade designation Santolink XI-100 from Monsanto Chemical Company.

As chemical curing agents for activated unsaturated groups may be mentioned free-radical initiators such as peroxides and hydroperoxides. These compounds are in general well-known to those skilled in the art and need no specific elucidation. As specific preferred examples, however, may be mentioned cumene hydroperoxide and methylethyl ketone peroxide.

Of course, as indicated above, activated unsaturated groups may be cured with the aid of UV radiation in combination with a photointiator. See, for example, US4382102, the disclosure of which is incorporated by reference herein as if fully set forth.

Depending upon the type of coating composition and desired application, various other conventional catalyst-related additives may also be utilized. For example, if an autoxidatively drying coating is desired, any number of well-known driers may be added to the coating composition. As examples may be mentioned metal siccatives such as manganese octoate and cobalt octoate.

The use of these other additives is well-known to those skilled in the art, and need not be elucidated further.

As suitable siccatives for use with the autoxidizable resins may be mentioned, for example, metal salts of (cyclo)aliphatic acids such as octanoic, linoleic and naphthenic acid, or water-soluble metal salts or metal complexes, for instance metal halides or metal acetyl acetonates, the applicable metals being lithium, barium, cobalt, manganese, lead, zirconium, calcuim zinc and rare earth metals. Preferred of these are the salts of cobalt, zirconium and calcium.

As suitable crosslinking agents for use with activated methylene group-containing resins may be mentioned, for example, the same amine group-containing crosslinking agents as suitable for use with the activated unsaturated group-containing resins.

As other suitable crosslinking agents may be mentioned those that react via a Michael addition-type reaction, that is, activated unsaturated group-containing compounds such as discussed above and mentioned in the previously incorporated references.

Also suitable for use are the aforementioned isocyanates and melamines.

Suitable curing/crosslinking agents for use with the epoxy group-containing resins are again well-known to those skilled in the art and include, most preferably, the aforementioned amines, as well as the aforementioned isocyanates and melamines.

As mentioned above, the amphiphatic emulsifiers, when utilized in accordance with the present invention, function as emulsifying agents for the generally lipophilic crosslinkable binders. These amphipatic emulsifiers comprise the reaction product of a lipophilic internally unsaturated polyester backbone with a hydrophilic polyoxyalkylene monoamine monoalkylether of the formula (I) 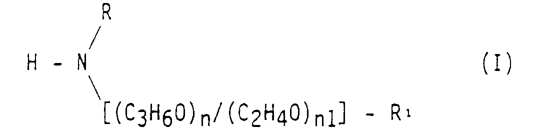 wherein
R is the residue resulting from the reaction of a monoepoxide compound with the amine group,
R¹ is selected from a C₁ to C₄ alkyl group,
n is 0 to 25,
n1 is 1 to 50,
with the proviso that n+n1 ≤ 50,
the amphiphatic emulsifier comprising on average 30-80 wt% ethylene oxide units, an acid value of less than 5, an Mn of 1000-50000, an OH value of 10-300 and a C=C equivalent weight of 100-50000.

Preferred for (I) is the combination of R being the residue of a monoepoxide having 1 to 20 carbon atoms, R¹ being a methyl group, n being from 2 to 4, and nl being from 16 to 20.

Particular preferred for the monoepoxide is the glycidyl ester of a carboxylic acid having the general formula (XII) 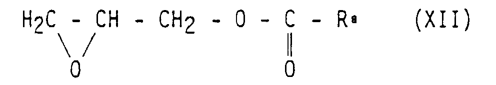 wherein R⁸ is an alkyl group with 4-10 carbon atoms. An especially preferred monoepoxide of the general formula (XII) is the glycidyl ester of 1,1-dimethyl-1-heptane carboxylic acid, which is commercially available under the trade designation Cardura E from Shell.

As indicated above, the backbone may be provided with these hydrophilic groups by grafting directly onto the lipophilic backbone via reaction of the amine group of (I) with the internal unsaturation of the backbone. Optionally, however, esterifiable monomers containing unsaturation may first be reacted with (I), then these monomers condensation polymerized with other esterifiable monomers to produce the reactive amphiphatic emulsifiers in accordance with the present invention.

The reactive amphiphatic emulsifiers in accordance with the present invention should comprise, on average:
- (i): 30-80 wt% ethylene oxide units, more preferably 40-60wt%,
- (ii): an acid value of less than 5, more preferably less than 1,
- (iii): an Mn of 1000-50000, more preferably 1000-20000 and especially 1000-12000,
- (iv): an OH value of 10-300, more preferably 30-70, and
- (v): a C=C equivalent weight of 100-50000, more preferably 4000-9000.

The aqueous coating compositions in accordance with the present invention may, in general, be formulated according to normal dispersion and/or emulsion techniques utilized in the coatings industry.

As emulsification-effective amounts, the reactive amphiphatic emulsifiers are generally utilized in amounts so as to result in at least 2,5 parts by weight, preferably from 5 to 50 parts by weight, and especially from 10 to 30 parts by weight, of ethylene oxide groups per 100 parts by weight of the binder plus reactive amphiphatic emulsifier.

The particular choice of curing/crosslinking agent and amount utilized, of course, can vary widely depending on a number of factors including, but not limited to, the particular binder, coating system, application method, substrate and ulitimate use. As indicated before, these and other factors will be appreciated by one skilled in the art, who can choose the proper type and amount of curing agent accordingly.

For example, the amine crosslinking agents are preferably utilized in crosslinking-effective amounts such that the number of equivalents of functional groups in the resin component to the number of equivalents of amine hydrogen is in the range of from 1,5 to 2,5, more preferably in the range of from 1,8 to 2,2.

The oxazolidine crosslinking agents are preferably utilized in crosslinking-effective amounts such that the number of equivalents of functional groups in the resin component to the number of equivalents of potential secondary amine nitrogen is in the range of from 0,2 to 3,5, more preferably in the range of from 1,0 to 2,0.

As another example with respect to activated unsaturated groups-containing binders, the malonate and acetoacetate crosslinking agents are preferably utilized crosslinking-effective in amounts such that the number of equivalents of activated unsaturated groups in the resin component to the number of equivalents of activated methylene hydrogen is in the range of from 0,25 to 4, preferably in the range of from 0,5 to 2,0.

This same crosslinking-effective ratio applies when activated unsaturated group-containing crosslinking agents are utilized for the activated methylene group-containing resins.

The polyallyloxy groups-containing curing/crosslinking agents are preferably utilized in curing/crosslinking-effective amounts ranging from 10 wt% to 50 wt%, based upon the weight of the resin component.

For autoxidation, the siccatives are generally utilized in catalyzing effective amounts ranging from 0,001 to 3 wt% based upon the weight of the autoxidizable resin.

For UV curing, the photoinitiators are generally utilized in curing-effective amounts ranging from 0,001 to 3 wt% based upon the weight of the UV-curing resin.

In addition to the curing/crosslinking agents, the aqueous coating compositions may contain the usual additives such as, for example, pigments, fillers, levelling agents, emulsifiers, anti-foaming agents and other rheology control agents, antioxidants, UV stabilizers, antisag agents and minor amounts of co-solvents as required, the only limitation being that these additives must be compatible with the other components of the coating composition. This information is well-known and/or readily available to those skilled in the art.

If a co-solvent is utilized, it is preferred that such should be water miscible and utilized in amounts of no more than 10% by weight based upon the aqueous coating composition. As examples of suitable watermiscible co-solvents may be mentioned butyl glycol, isopropyl glycol, butyl diglycol, isopropanol, n-propanol, diacetone alcohol and the like.

The aqueous coating compositions may be formulated to various solids contents, generally ranging from about 20% to about 75%, but desirably in the range of from about 30% to about 55%, depending on the method of application chosen.

The aqueous coating compositions in accordance with the present invention may be applied in any known manner, such as by roller coating, spraying, brushing, sprinkling, flow coating or dipping. It is preferred that the composition should be applied by spraying.

Suitable substrates include those of metals which may be either pretreated or not, wood, synthetic materials, paper, glass or leather. Especially preferred are metals such as iron, steel and aluminum, and synthetic substrates such as polyurethanes, polyolefins and polycarbonates, as well as reinforced varieties thereof.

Curing of the coating, of course, depends upon the particular coating, application method and use. Again these factors and others will be appreciated by one skilled in the art, who can readily make the appropriate choice accordingly.

For example, coating compositions including the above-mentioned functionalities with a properly chosen crosslinking agent can suitably be cured at low or ambient temperatures of from 0°C-40°C, or can be baked at elevated temperatures for accelerated cure (e.g., 60°C-120°C).

An especially preferred use of the aqueous coating compositions in accordance with the present invention is in the automobile repair/refinishing industry. When so utilized, it is preferred that the system be ambient temperature curable, especially with the aid of an amine group-containing crosslinking agent, such as those already mentioned above. The resin component, therefore, should comprise ambient temperature amine-reactive functional groups.

Especially preferred for this use are resins containing at least two pendant activated unsaturated groups which, most preferably, are (meth)acryloyl groups and/or acetoacetate groups. For further details, reference may be had to the previous discussion and previously incorporated references such as US4990577 and WO 92/07010.

Another preferred use of the aqueous coating compositions in accordance with the present invention is as a primer for various metal substrates. When so utilized, it is again preferred that the system be ambient temperature curable, but with resins containing at least two pendent activated methylene groups. Especially preferred for this use is an acrylic-based resin containing pendant acetoacetate groups. For further details, reference may be had to the previous discussion and previously incorporated references such as US4772680.

A further preferred use of the present invention is in the coating of plastics substrates such as polyurethane, polyolefine, polycarbonate and modified (e.g. fiberglass-reinforced) combinations thereof. The plastics surfaces to be coated should be thoroughly cleaned of dust and grease before application of the material in order to ensure optimum wetting and adhesion. Polyolefines in particular should be cleaned and pretreated by flaming off in accordance with the current state-of-the-art in the automobile industry.
Hydroxy-functional polyester resins, acetoacetate functional polyester resins or combinations thereof are suitable for this application. Particularly preferred are flexible polyester resins crosslinked with isocyanates.

The foregoing general discussion of the present invention will be exemplified by the following examples offered by way of illustration and not limitation on the scope thereof.

### EXAMPLES

### Production of Resins and Emulsifiers

The following resins(binders) and emulsifiers were produced for use in the Examples herein.

### Binder B1: Acetoacetate-functional Polyester

A glass reactor was charged with 3573,4 parts of 1,4-dimethylol cyclohexane, 1898,4 parts of trimethylol propane, 3439,6 parts of hexahydroterephthalic anhydride, 1088,4 parts of adipic acid and heated to 250°C. Water was removed via a water separator. On reaching 250°C, approx. 190 parts of xylene were added and the reaction was allowed to proceed until the acid value had dropped below 2. The mixture was subsequently cooled to approx. 100°C.

To 5000 parts of the polyesterpolyol solution thus obtained were added 2066,2 parts of ethyl acetoacetate, 1500 parts of toluene, 7,1 parts of dibutyltin dioxide and 7,1 parts of triphenylphosphite. The mixture was heated to 150°C and a mixture of ethanol and toluene was removed by distillation. After removing approx. 1310 parts of distillate, the mixture was cooled to 120°C and vacuum distilled for approx. 2 hours. The solution was then cooled to room temperature and 1250 parts of xylene were added.

The solution thus obtained had a solids content of 82,8 wt.%, an acetoacetate value of 140 (on solids) and a viscosity of 5560 mPa.s (Epprecht RM 15T, C10, 20°C).

### Binder B2: Polyesterpolyol

A glass reactor was charged with 76,22 parts of 1,6-hexanediol and 21,33 parts of trimethylol propane. The mixture was heated to 125°C and 11,93 parts of phthalic anhydride, 23,57 parts of adipic acid and 66,91 parts of isophthalic acid were added. The mixture was then heated to 250°C, water being removed via a water separator, and maintained at this temperature until the acid value had dropped below 3. Subsequently the mixture was cooled to room temperature and thinned to 80 wt.% solids with butyl acetate.

The clear resin solution had a hydroxyl value of 140 (on solids) and a viscosity of 5560 mPa.s (Epprecht RM 15T, C10, 20°C).

### Polymeric Emulsifier PE1

798,7 parts of neopentyl glycol, 597,3 parts of adipic acid and 354,0 parts of maleic anhydride were charged to a glass reactor and heated to 225°C, water being removed via a water separator. As soon as the acid value had dropped to approx. 35, the mixture was cooled to 180°C and 938,7 parts of Cardura E (a glycidyl ester of versatic acid commercially available from Shell Chemical Company) were added. The mixture was maintained at 180°C until the acid value had dropped below 1,0. After cooling to approx. 55°C, 2810,9 parts of Jeffamine M-1000 (a polyoxyalkylene amine commercially available from Texaco Chemical Company) were added and the mixture was heated to 150°C over a period of 3 hours. This temperature was held for several hours. The reaction was monitored by removing a sample from the mixture every half-hour and adding 5 parts of it to 95 parts of demineralised water. As soon as a clear solution was obtained, the reaction was stopped by cooling down to room temperature.

### Polymeric Emulsifier PE2

Example PE1 was repeated using 861,6 parts of 1,6-hexane diol, 518,4 parts of phthalic anhydride, 370,0 parts of maleic anhydride, 969,5 parts of Cardura E and 2936,9, parts of Jeffamine M-1000.

### Production of Emulsions

The following emulsions were produced from the above-described resins and emulsifiers

### Example E1:

114 parts by weight (pbw) of B1, 6 pbw of PE1 and 214 pbw of demineralised water were mixed with a stirrer for 30 minutes at 1500 rpm. The resulting stable emulsion had a solids content of 30 wt.%.

### Exmample E2:

96 parts by weight (pbw) of B1, 20 pbw of PE1 and 216 pbw of demineralised water were mixed with a stirrer for 30 minutes at 1500 rpm. The resulting stable emulsion had a solids content of 30 wt.%.

### Example E3:

116 parts by weight (pbw) of B2, 7 pbw of PE1 and 210 pbw of demineralised water were mixed with a stirrer for 30 minutes at 1500 rpm. The resulting stable emulsion had a solids content of 30 wt.%.

### Production of Clear Films

Coating materials were produced by simple admixture of the following components:

### Example CC1:

E1 and Jeffamine T-403 (a polyoxypropylene triamine available from Texaco Chemical Company)

### Example CC2:

E2 and Jeffamine T-403 (a polyoxypropylene triamine available from Texaco Chemical Company)

### Example CC3:

E3 and Basonat PLR 8878 (a polyfunctional isocyanurate available from BASF AG)

In each case, the materials were mixed in stoichiometric amounts (1 equivalent reactive resin group per equivalent primary amine or isocyanate group) to attain a theoretical crosslinking of 100%.

After mixing the reactive components, the resulting coating compositions were applied to glass panels, using a doctor blade, to a wet film thickness of 200 µm. The panels were subsequently stoved for 40 minutes at 90°C. The resulting films were clear and exhibited high gloss and a good appearance.

Solvent resistance to ethanol and xylene was measured by soaking a 0,5 cm diameter roll of cellulose paper in the solvent and rubbing it back and forth (1 D-Rub) with about 400 g pressure on the film. The results after a wet number of D-Rubs was assessed according to DIN 53230 (0 = unchanged; 5 = very strongly attacked). As no increase in viscosity was noted during the useful life of the mixtures, pot-life was defined as the time elapsed after mixing when newly-applied films were hazy after curing.

The results are given in Table 1 below.

**Table 1**

| Example | Pot-life | Solvent | No. of D-Rubs | Resistance | Solvent | No. of D-Rubs | Resistance |
|---|---|---|---|---|---|---|---|
| CC1 | 1 | Ethanol | 100 | 1 | Xylene | 50 | 3 |
| CC2 | 1 | Ethanol | 100 | 0-1 | Xylene | 50 | 3 |
| CC3 | 1 | Ethanol | 100 | 1 | Xylene | 100 | 1 |

Production of Primers

### Pigment Base:

2640 parts by weight (pbw) of titanium dioxide 2190 (available from Kronos Titan GmbH), 90 pbw of Aerosil 200 (Degussa AG), 20 pbw of Bayferrox 306 (Bayer AG), 480 pwb of Mirko-Talkum M 10 (Pinorol) and 1710 pbw of EWO-Pulver (Sachtleben Chemie GmbH) were added to 3130 pwb of Bayhydrol VP LS 2902 E (a waterborne PUR-resin from Bayer AG) and homogenised. The resulting mixture was dispersed to a particle size of ≤ 15 µm with a horizontal pearl-mill and the material was subsequently thinned to a solid content of 62 wt.% with a water/butyl glycol mixture.

### Example PM 1:

A primer material was produced by the admixture of 150 pbw of El with 287,5 pbw of the pigment base.

A stoichiometric amount of Desmodur VP LS 2980 (now known as Bayhydur VP LS 2980) (a poly-isocyanate from Bayer AG) was subsequently added to obtain a theoretical crosslinking of 100%.

### Example PM 2:

A primer material was produced by the admixture of 100 pwb of E3 with 180 pbw of the pigment base.

An amount of Desmodur VP LS 2980 corrsponding to 1,5 times the stoichiometric requirement was subsequently added to obtain a theoretical crosslinking of 150%.

Both primers were applied by pneumatic spraying (dry-film thickness 30-40 µm) to a variety of plastics substrates (Xenoy Cl 101 from GEP, PUR-RIM-IMR from Pebra, Arnitel VM 550 from Akzo Plastics and Pocan from Bayer AG) and stoved for 40 minutes at 90°C. The primers were then overcoated with a white topcoat (45-99905 from Akzo Coatings GmbH - dry-film thickness 40µm) and stoved for 40 minutes at 90°C.

The resulting coatings were then tested for adhesion by the Cross-Cut test according to DIN 53151, stone-chipping resistance according to test specification VW 3.14.3 of Volkswagen AG, and humidity resistance according to DIN 50017.

The DIN 53151 cross-cut adhesion test has ratings from Gt 0 to Gt 5, whereby Gt 0 signifies no loss of adhesion (0% of the surface has been peeled or chipped off) and Gt 5 signifies a severe loss of adhesion (over 65% of the surface has been peeled or chipped off).

The VW stone-chipping test has ratings from KW1 (the best possible result) to KW 10 (the worst possible). These ratings are determined by comparing test results with with pictures of standard damage patterns.

The ratings used for the DIN 50017 humidity test are defined in DIN 53230 and range from m0g0 to m5g5. The best result is m0g0 and the worst m5g5. The rating is in two parts, "m" referring to the quantity (Menge) of blisters (0 + none, 5 = very many) and "g" to their size (Größe; 0 = none, 5 = over 5 mm). Assessment of results is again carried out by comparison with reference pictures.

The results are given in Table 2 below.

**Table 2**

| Example | Substrate | Cross-Cut | Stone-Chipping | Humidity Test |
|---|---|---|---|---|
| PM 1 | Xenoy Cl 101 | Gt 2 | KW 2 | m0g0 |
| | PUR-RIM-IMR | Gt 1 | KW 1 | m0g0 |
| | Arnitel VM 550 | Gt 0 - 1 | KW 1 | m0g0 |
| | Pocan | Gt 0 - 1 | KW 1 - 2 | m0g0 |
| PM 2 | Xenoy Cl 101 | Gt 0 - 1 | KW 2 | m0g0 |
| | PUR-RIM-IMR | Gt 0 | KW 1 - 2 | m0g0 |
| | Arnitel VM 550 | Gt 1 | KW 1 - 2 | m0g0 |
| | Pocan | Gt 0 | KW 1 | m0g0 |

## Claims

1. An aqueous coating composition comprising (A) a generally lipophilic, crosslinkable binder, (8) optionally, a chemical curing/crosslinking agent for the crosslinkable binder and (C) an emulsifying agent, characterized in that the emulsifying agent comprises an amphiphatic emulsifier which comprises the reaction product of a lipophilic internally unsaturated polyester backbone and a hydrophilic polyoxyalkylene monoamine monoalkylether of the formula (I) 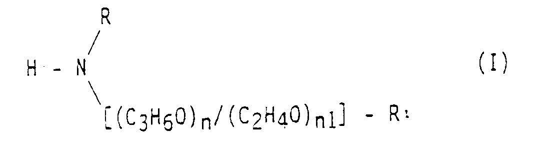 wherein
R is the residue of a monoepoxide compound after reaction with an amine group,
R¹ is selected from a C₁ to C₄ alkyl group,
n is 0 to 25,
n1 is 1 to 50,
with the proviso that n+n1 ≤ 50,
the amphiphatic emulsifier comprising on average 30-80 wt% ethylene oxide units, an acid value of less than 5, an Mn of 1000-50000, an OH value of 10-300, and a C=C equivalent weight of 100-50000.

2. The aqueous coating composition according to claim 1, characterized in that R is the residue of a monoepoxide compound having from 1 to 20 C atoms after reaction with an amine group, R¹ is a methyl group, n is 2 to 4 and nl is 16 to 20.

3. The aqueous coating composition according to any one of claims 1-2, characterized in that R is the residue of a monoepoxide compound of the general formula (XII) 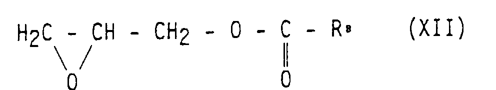 wherein R⁸ is an alkyl group with 4-10 carbon atoms, after reaction with an amine group.

4. The aqueous coating composition according to any one of claims 1-3, characterized in that it comprises the amphiphatic emulsifier in an amount so as to result in at least 2,5 parts by weight of ethylene oxide units per 100 parts by weight of the combination of the generally lipophilic binder plus amphiphatic emulsifier.

5. The aqueous coating composition according to claim 4, characterized in that it comprises the amphiphatic emulsifier in an amount so as to result in from 5 to 50 parts by weight of ethylene oxide units per 100 parts by weight of the combination of the generally lipophilic binder plus amphiphatic emulsifer.

6. The aqueous coating composition according to claim 5, characterized in that it comprises the amphiphatic emulsifier in an amount so as to result in from 10 to 30 parts by weight of ethylene oxide units per 100 parts by weight of the combination of the generally lipophilic binder plus amphiphatic emulsifier.

7. The aqueous coating composition according to any one of claims 1-6, characterized in that the coating composition comprises an amine group-containing compound as crosslinking agent, and that the generally lipophilic binder comprises amine-reactive functional groups.

8. The aqueous coating composition according to any one of claims 1-6, characterized in that the coating composition comprises an isocyanate group-containing compound as crosslinking agent, and that the generally lipophilic binder comprises acetoacetate-groups, hydroxylgroups or combination thereof.

## Patentansprüche

1. Wässriges Beschichtungsmittel, enthaltend (A) einen allgemein lipophilen vernetzbaren Binder, (B) gegebenenfalls ein chemisches Härtungs/Vernetzungsmittel für den vernetzbaren Binder und (C) ein Emulgiermittel, dadurch gekennzeichnet, dass das Emulgiermittel einen amphiphatischen Emulgator enthält, der das Reaktionsprodukt einer lipophilen, intern ungesättigten Polyestergrundkette und eines hydrophilen Polyoxyalkylen-monoamin-monoalkylethers der Formel (I) 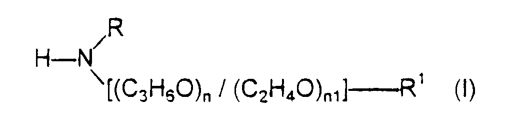 enthält, worin
R den Rest einer Monoepoxidverbindung nach Umsetzung mit einer Amingruppe darstellt,
R1 gewählt ist aus C1- bis C4-Alkylgruppen,
n Null bis 25 und n1 1 bis 50 ist,
mit der Massgabe, dass n+n1 ≤50,
wobei der amphiphatische Emulgator durchschnittlich 30-80 Gew.% Ethylenoxideinheiten enthält und einen Säurewert von weniger als 5, ein Mn von 1000-50000, einen OH-Wert von 10-300 und ein C=C-Äquivalentgewicht von 100-50000 hat.

2. Wässriges Beschichtungsmittel nach Anspruch 1, dadurch gekennzeichnet, dass R der Rest einer 1 bis 20 C-Atome enthaltenden Monoepoxidverbindung nach Umsetzung mit einer Amingruppe ist, wobei R1 eine Methylgruppe, n = 2 bis 4 und n1 16 bis 20 ist.

3. Wässriges Beschichtungsmittel nach einem der Ansprüche 1-2, dadurch gekennzeichnet, dass R der Rest einer Monoepoxidverbindung der allgemeinen Formel (XII) 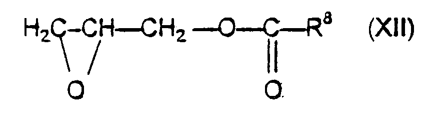 ist, worin R⁸ eine Alkylgruppe mit 4-10 kohlenstoffatomen nach Umsetzung mit einer Amingruppe ist.

4. Wässriges Beschichtungsmittel nach einem der Ansprüche 1-3, dadurch gekennzeichnet, dass es den amphiphatischen Emulgator in einem solchen Anteil enthält, dass dies mindestens 2,5 Gewichtsteile Ethylenoxideinheiten pro 100 Gewichtsteile der Kombination aus dem allgemein lipophilen Binder plus dem amphiphatischen Emulgator ergibt.

5. Wässriges Beschichtungsmittel nach Anspruch 4, dadurch gekennzeichnet, dass es den amphiphatischen Emulgator in einem solchen Anteil enthält, dass dies 5 bis 50 Gewichtsteile Ethylenoxideinheiten pro 100 Gewichtsteile der Kombination des allgemein lipophilen Binders plus dem amphiphatischen Emulgator ergibt.

6. Wässriges Beschichtungsmittel nach Anspruch 5, dadurch gekennzeichnet, dass es den amphiphatischen Emulgator in einem solchen Anteil enthält, dass dies 10 bis 30 Gewichtsteile Ethylenoxideinheiten pro 100 Gewichtsteile der Kombination aus dem allgemein lipophilen Binder plus dem amphiphatischen Emulgator ergibt.

7. Wässriges Beschichtungsmittel nach einem der Ansprüche 1-6, dadurch gekennzeichnet, dass das Beschichtungsmittel eine Amingruppen enthaltende Verbindung als Vernetzungsmittel enthält und dass der allgemein lipophile Binder mit Amin reaktionsfähige funktionelle Gruppen enthält.

8. Wässriges Beschichtungsmittel nach einem der Ansprüche 1-6, dadurch gekennzeichnet, dass das Beschichtungsmittel eine Isocyanatgruppenenthaltende Verbindung als Vernetzungsmittel enthält und dass der allgemein lipophile Binder Acetoacetatgruppen, Hydroxylgruppen oder Kombinationen hiervon enthält.

## Revendications

1. Une composition de revêtement aqueuse comprenant (A) un liant généralement lipophile réticulable, (B) éventuellement un agent de durcissement/réticulation pour le liant réticulable et (C) un agent émulsifiant, caractérisé en ce que l'agent émulsifiant comprend un émulsifiant amphiphile qui comprend le produit de la réaction d'un squelette de polyester à insaturation interne lipophile et un polyoxyalkylène monoamine monoalkyléther hydrophile de formule (I): 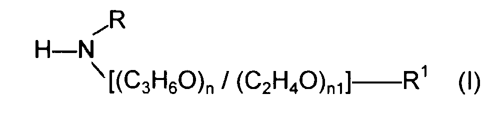 où R est le résidu d'un composé monoépoxydé après réaction avec un groupe amine,
R₁ est choisi parmi le groupe alkyle en C₁ à C₄,
n vaut de 0 à 25,
n1 vaut de 1 à 50,
avec cette condition que n+n1 ≤ 50,
l'émulsifiant amphiphile comprenant en moyenne 30 à 80% en poids de motifs oxyde d'éthylène, un indice d'acide inférieur à 5, un Mₙ de 1000 - 50000, un indice de OH de 10 à 300 et un poids équivalent de C=C de 100 à 50000.

2. Une composition de revêtement aqueuse selon la revendication 1, caractérisée en ce que R est le résidu d'un composé monoépoxydé comportant de 1 à 20 atomes de carbone après réaction avec un groupe amine, R¹ est un groupe méthyle, n vaut de 2 à 4 et n1 vaut de 16 à 20.

3. Une composition de revêtement aqueuse selon l'une quelconque des revendications 1 à 2, caractérisée en ce que R est le résidu d'un composé monoépoxydé de formule générale (XII): 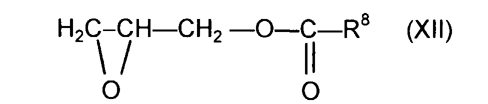 où R⁸ est un groupe alkyle comportant 4 à 10 atomes de carbone, après réaction avec un groupe amine.

4. Une composition de revêtement aqueuse selon l'une des revendications 1 à 3, caractérisée en ce qu'elle comprend un émulsifiant amphiphile en une quantité telle qu'il y ait au moins 2,5 parties en poids de motifs oxyde d'éthylène pour 100 parties en poids de la combinaison de liant généralement lipophile plus l'émulsifiant amphiphile.

5. Une composition de revêtement aqueuse selon la revendication 4, caractérisée en ce qu'elle comprend l'émulsifiant amphiphile en une quantité telle qu'il y ait 5 à 50 parties en poids de motifs d'oxyde d'éthylène pour 100 parties en poids de la combinaison de liant généralement lipophile plus l'émulsifiant amphiphile.

6. Une composition de revêtement aqueuse selon la revendication 5, caractérisée en ce qu'elle comprend l'émulsifiant amphiphile en une quantité telle qu'il y ait 10 à 30 parties en poids de motifs oxyde d'éthylène pour 100 parties en poids de la combinaison de liant généralement lipophile plus l'émulsifiant amphiphile.

7. Une composition de revêtement aqueuse selon l'une quelconque des revendications 1 à 6, caractérisée en ce que la composition de revêtement comprend un dérivé contenant du groupe amine en tant qu'agent de réticulation et en ce que le liant généralement lipophile comprend les groupes fonctionnels réactifs avec les amines.

8. Une composition de revêtement aqueuse selon l'une quelconque des revendications 1 à 6, caractérisée en ce que la composition de revêtement comprend un dérivé contenant du groupe isocyanate en tant qu'agent de réticulation et en ce que le liant généralement lipophile comprend des groupes acétylacétate, des groupes hydroxyle ou leurs combinaisons.
